Europäisches Patentamt

European Patent Office

Office européen des brevets

(11) Publication number: **0 547 575 A1**

## EUROPEAN PATENT APPLICATION

(21) Application number: **92121386.4**

(22) Date of filing: **16.12.92**

(51) Int. Cl.5: **B01D 63/02**, B01D 53/22

(30) Priority: **16.12.91 US 808143**

(43) Date of publication of application:
**23.06.93 Bulletin 93/25**

(84) Designated Contracting States:
**DE FR GB IT NL**

(71) Applicant: PERMEA, Inc.
11444 Lackland Road
St. Louis Missouri 63146(US)

(72) Inventor: Rice, Arthur William
1733 Duello Road
O'Fallon, MO 63366(US)
Inventor: Brockmann, Thomas James
331 Central Place
Kirkwood, MO 63122(US)

(74) Representative: Schwabe - Sandmair - Marx
Stuntzstrasse 16
W-8000 München 80 (DE)

(54) Hollow fiber gas separation module.

(57) The present invention relates to a membrane gas separation module containing a multiplicity of hollow fibers in a bundle. The bundle is encompassed in a sleeve so as to improve the packing factor of the fibers and reduce the bypass factor of the module resulting in more effective utilization of the gas separation membranes.

FIG. I

## FIELD OF THE INVENTION

This invention relates to a hollow fiber membrane gas separation module for separating at least one gas from gaseous mixtures by permeation of at least one other gas through the hollow fibers. More particularly, the invention relates to a gas separation module which provides countercurrent flow for efficient, effective separation of the gases.

## BACKGROUND OF THE INVENTION

It is known to use a gas separation module comprising a bundle of unconstrained, unsupported hollow fiber membranes positioned in a cylindrical shell for the separation of a mixture of gases. One disadvantage of this construction is that the gaseous mixture flowing along the bundle on the outside of the individual fibers tends to pass into the free space instead of entering or staying in the fiber bundle for effective separation of one gas from another. In addition, gaps can form in the bundle itself.

Various methods have been tried to overcome the bypassing or channeling of the gas into the above described free space. In U.S. Patent 4,671,875 issued to Donald J. Stookey, a flexible imperforate sleeve is positioned in the shell surrounding the bundle of hollow fiber membranes. One end of the sleeve is secured to the fiber bundle adjacent to the tubesheet and the other end of the sleeve is secured to the inner surface of the cylindrical shell leaving a retroflexed intermediate portion of the sleeve extending down the shell between the shell and the bundle of hollow fiber membranes. A gas entering the shell inflates the flexible sleeve in an attempt to occupy a substantial portion of the free space between the fiber bundle and the shell.

Although this method may improve the permeation of the gas through the hollow fiber membranes, the flow is still not countercurrent and a gap still exists.

In U.S. Patent 4,865,736 issued to Myron Coplan, the fiber bundle is encased within an impervious barrier and the pressurized feed fluid is fed into the channel formed between the exterior of the casing and the interior of the shell, and passes into the fiber bundle through an opening in the impervious barrier. This is another attempt at establishing countercurrent flow in an axial direction, however, the module requires annular helically wound hollow fibers rather than a bundle of parallel hollow fibers.

U.S. Patent 5,026,479 issued to Benjamin Bikson et al, provides an annular hollow fiber bundle in a shell having four ports; a fluid entrance port, a sweep fluid entrance port, a non-permeate exit port and sweep fluid permeate exit port. In this case in an attempt to obtain the countercurrent flow a sweep gas is introduced.

The present invention provides a gas separation module containing a bundle of parallel fibers wherein substantial countercurrent flow is obtained to provide efficiency for the separation of gases.

## SUMMARY OF THE INVENTION

The present invention provides a hollow fiber gas separation module having a bypass factor less than 0.95. The module has a cylindrical shell with a feed gas inlet and a non-permeate outlet at substantially opposite ends of the shell and a permeate outlet. The shell contains a bundle of hollow fiber membranes positioned in and extending along the shell, each end of the bundle terminating in and penetrating a tubesheet.

A conforming sleeve, substantially impermeable to the permeate gas, is positioned in the shell axially and surrounds the bundle of fibers. One end of the sleeve is affixed to the tubesheet nearest the non-permeate outlet. The sleeve extends at least about sixty percent of the length of the fibers as measured between the tubesheets and the sleeve conforms in such a manner that the bypass factor of the module is less than about 0.95, and the packing factor of the bundle of hollow fibers is from about 45% to about 80%.

The packing factor is the ratio, expressed in percent, of the sum of the cross-sectional area of the fibers (as if they were solid) to the cross-sectional area of the bundle.

The bypass factor is defined as the ratio of the gaseous flow between the conforming sleeve and the inside of the cylindrical shell (gap) to the gaseous flow in the fiber bundle. Although this ratio may vary somewhat along the length of the bundle, an average (or constant) value can be used to characterize the degree of bypassing.

The bypass factor is defined as follows:

$$\frac{\text{AXIAL FLOW IN THE GAP } (F_G)}{\text{AXIAL FLOW IN THE BUNDLE } (F_B)} = \text{A CONSTANT}$$

$$\frac{F_G}{F_B} = \frac{\theta}{1-\theta}$$

$$\theta = \frac{F_G}{F_G + F_B}$$

$\theta$ = 0 where there is 100 percent countercurrent flow within the bundle

$\theta$ = 1 where there is 100 percent crosscurrent flow

$\theta$ is the bypass factor

Thus the objectives to obtain 100% countercurrent flow in a separation module would be reached by a bypass factor value approaching zero. As the flow in the gap is reduced, the amount of countercurrent flow in the bundle is increased. Countercurrent flow in the bundle of hollow fibers creates a naturally occurring sweep without the addition of any other sweep gas into the system resulting in an improved recovery of the desired product.

In order to achieve a bypass factor approaching zero, a conforming sleeve is positioned in the shell axially surrounding the bundle of fibers. One end of the sleeve is affixed to the tubesheet nearest the nonpermeate product outlet. The sleeve extends at least about sixty percent of the length of the fibers as measured between the tubesheets, and preferably from about 70% to about 98% and most preferably from 80% to 90%. The sleeve is conformed in such a manner that the bypass factor of the module is less than about 0.95 and the packing factor from about 45% to about 80%. Preferably, the bypass factor is less than about 0.8 and most preferably, less than about 0.5. Although it is desirable to attain values less than 0.2, the amount of product recovery gain is typically relatively small in this range.

## THE DRAWINGS

FIG. 1 is a front elevational view of an embodiment of the hollow fiber membrane gas separation module of the present invention.

FIG. 2 is a front elevational view of another embodiment of a gas separation module in accordance with the present invention.

FIG. 3 is a graph depicting the improvement obtained in the separation of oxygen and nitrogen by a reduction in the bypass factor in an embodiment of the present invention.

FIG. 4 is a graph depicting an improvement in the separation of oxygen and nitrogen in a separation module of an embodiment in accordance with the present invention.

FIG. 5 is a graph depicting the improvement obtained in the percent recovery of product upon a reduction of the bypass factor in accordance with an embodiment of the present invention.

FIG. 6 is a graph depicting the improvement obtained in the effectiveness of the separators upon a reduction of the bypass factor in accordance with an embodiment of the present invention.

## DETAILED DESCRIPTION OF THE INVENTION

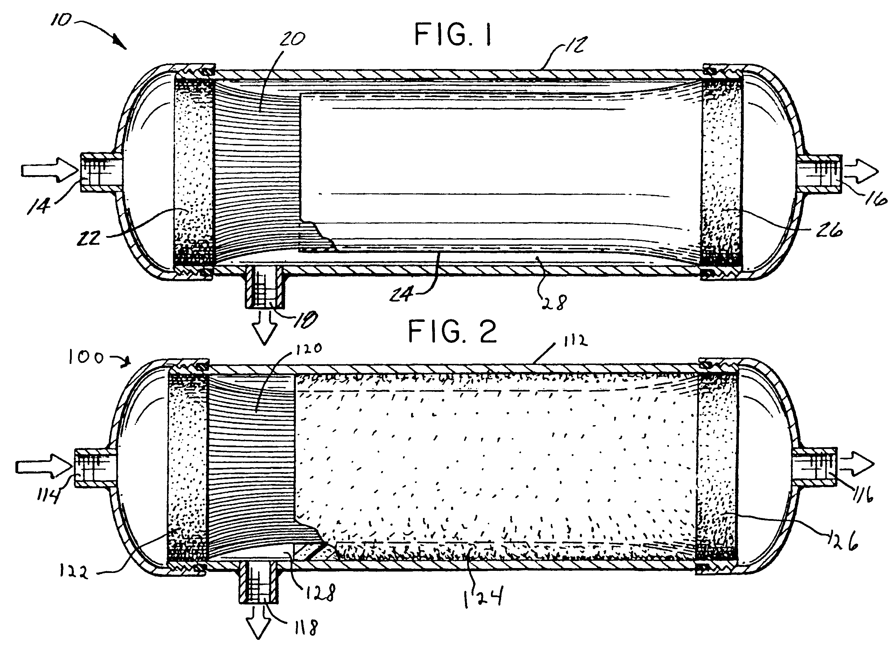

Referring now in detail to the drawings, there is shown in FIG. 1 a gas separation module 10 having a feed inlet 14 and a non-permeate gas outlet 16. The module 10 has a permeate outlet 18. A hollow fiber bundle 20 extends from tubesheet 22 to tubesheet 26 with the hollow fibers 20 penetrating each of the tubesheets so that the bores of the fibers are open to the ends of the cylindrical shell 12. In this manner feed gas enters the inlet 14 and is transferred through the bores of the fibers 20 into the bundle of fibers covered by a sleeve 24. The sleeve 24 is affixed to the tubesheet 26. The permeate gas which has penetrated the fibers from the bore to the exterior of the fibers travels in a countercurrent direction thereby enhancing the effectiveness of the separation module. The permeate gas then exits the sleeve and proceeds to the permeate gas exit 18. The gas which remains in the bores of the fibers, i.e., the nonpermeate gas, penetrates the tube-sheet 26 and leaves the module at exit 16. With the sleeve 24 in place, it can readily be seen that the gap 28 is not subject to substantial flow of gas. Instead the gap 28, although under some pressure, is substantially a "dead" space.

The sleeve 24 should remain conformed to the shape of the hollow fiber bundle so that no substantial gaps occur between the outside of the hollow fibers and the inside of the sleeve when the module is under pressure during use. Furthermore, the sleeve is substantially impermeable to the permeate gases.

FIG. 2 depicts another embodiment of the present invention whereupon the gap 128 is substantially filled with a material substantially impermeable to gas flow. The module 100 is designed in a similar manner to the module 10 of FIG. 1. In the module of FIG. 2 the feed gas enters the inlet 114 and by means of the bores of the fibers 120 goes through the tubesheet 122 and into the fiber bundle. The nonpermeate gas continues along the fiber bundle through the tubesheet 126 and the non-permeate product exits through the port 116. The permeate product travels away from the exit port 116 back toward the permeate exit port 118 creating a countercurrent flow in the fiber bundle. The cylindrical shell 112 contains only three ports, namely the feed inlet, the nonpermeate outlet and the permeate outlet.

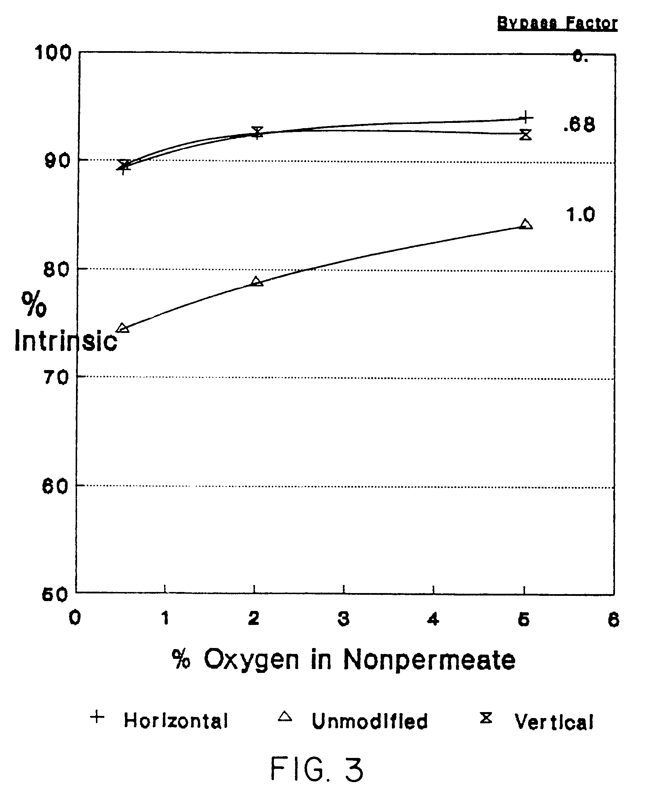

FIG. 3 is a graph depicting the results from Example 1.

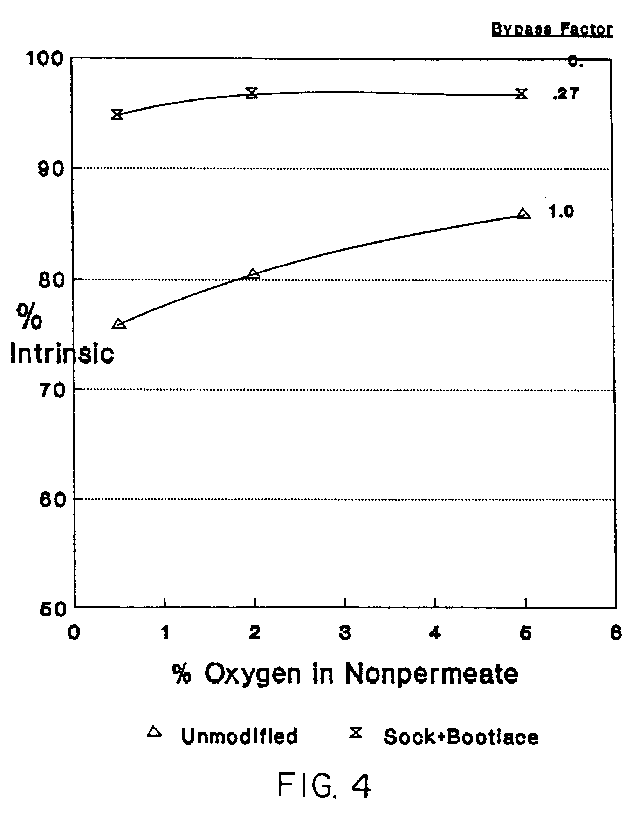

FIG. 4 sets forth the results from Example 2 appearing later in this text.

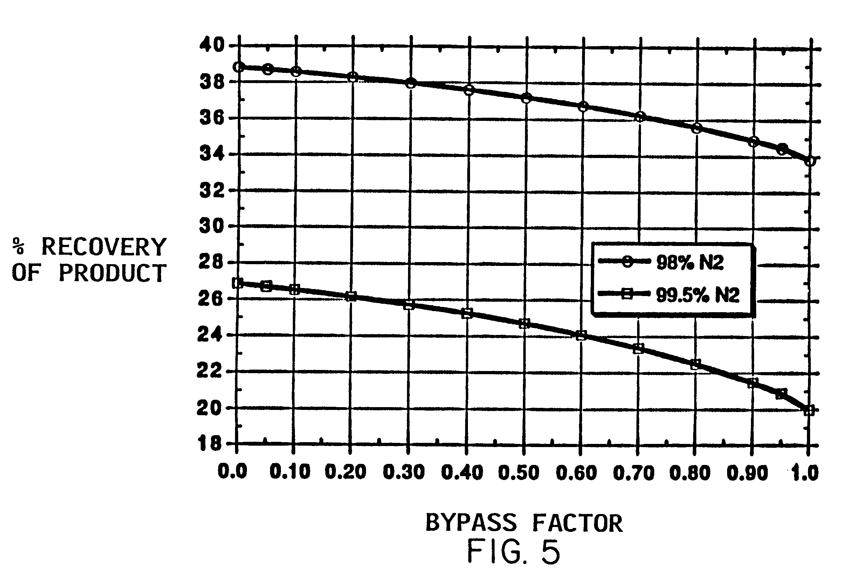

FIG. 5 sets forth, in graph form, the expected results in air recovery based on different bypass factors. Sufficient work has been completed such that computers can be utilized to accurately predict the behavior of the gas separator modules made in accordance with the present invention. Computer simulations were obtained using data from actual separator performance for the systems shown in FIGS. 1 and 2.

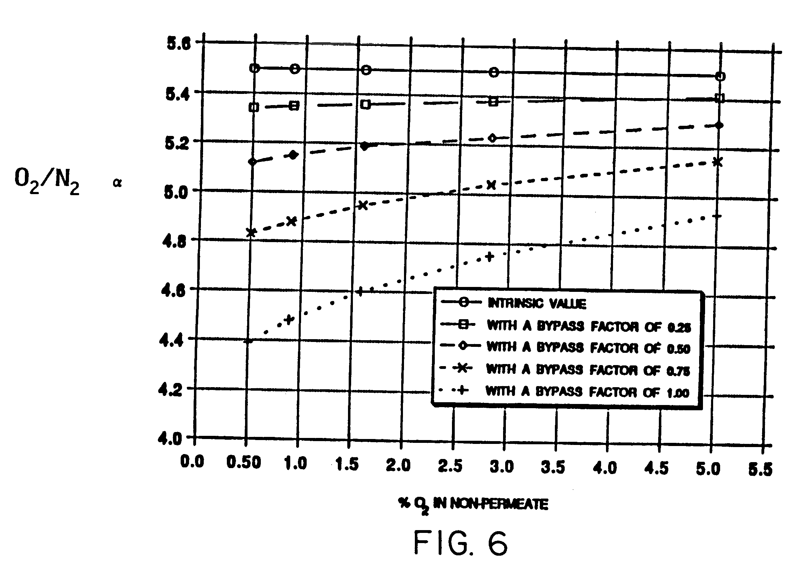

FIG. 6 depicts the effective oxygen/nitrogen alpha values for separators with specific bypass factors assuming the intrinsic alpha for the fiber bundle is 5.5 using a computer simulation which assumes 100% countercurrent flow and air separation at temperature and pressure conditions similar to Example 1.

A separation factor ($\alpha$a/b) for a membrane for a given pair of gases "a" and "b" is defined as the ratio of the permeability constant ($P_a$) of the membrane for gas "a" to the permeability constant ($P_b$) of the membrane for gas "b". A separation factor is also equal to the ratio of the permeability (Pa/$\lambda$) of a membrane of thickness $\lambda$ for gas "a" of a gaseous mixture to the permeability (Pb/$\lambda$) of the same membrane to gas "b", wherein the permeability for a given gas is the volume in cubic centimeters of gas at standard temperature and pressure (STP), which passes through a membrane per square centimeter of surface area, per second, for a partial pressure drop of 1 centimeter of mercury across the membrane per unit of thickness and is expressed as P/$\lambda$ = $cm^3/cm^2$-sec-cmHg.

In practice, the separation factor with respect to a given pair of gases for a given membrane can be determined employing numerous techniques which provide sufficient information for calculation of permeability constants or permeabilities. Several of the many techniques available for determining permeability constants, permeabilities and separation factors are disclosed by Hwang, et al., Techniques of Chemistry, Volume VII, Membranes in Separations, John Wiley & Sons, 1975 (herein incorporated by reference) at Chapter 12, pages 296 to 322.

An intrinsic separation factor as referred to herein is the separation factor for a material which has no channels for gas flow outside the fiber bundle, and is the highest achievable separation factor for the material. Such a material may be referred to as being continuous or nonporous. The intrinsic separation factor of a material can be approximated by measuring the separation factor of a compact membrane of the material. However, several difficulties may exist in the determination of an intrinsic separation factor, including imperfections introduced in the preparation of the compact membrane such as the presence of pores, the presence of fine particles in the compact membrane, undefined molecular order due to variations in membrane preparation and the like. Consequently, the determined intrinsic separation factor can be lower than the intrinsic separation factor. Accordingly, a "determined intrinsic separation factor" as employed herein refers to the separation factor determined for a dry compact membrane of the material.

Many of the membranes prepared for use in the separation modules of the present invention are prepared from glassy hydrophobic polymers, for example polysulfone. Hollow fiber membranes used for the separation of gases are well known in the art. The modules of the present invention generally contain a bundle of hollow fibers varying in length from about 90 cm (three feet) up to about 300 cm (ten feet) or more and each bundle will have a diameter generally from about 2.5 cm (one inch) to about 20 cm (eight inches).

The fibers may be straight fibers or "wavy" fibers having a permanent set wave of less than 0.5 cm in length and the wave having an amplitude of less than three times the diameter of the fiber.

When preparing a separation module in accordance with the present invention, one end of the hollow fiber bundle is cast in a tubesheet such that the fibers extend through the tubesheet. The tubesheet is generally an epoxy material which is cast as a liquid. The separators of the present invention are "double-ended" separators wherein each end of the hollow fiber bundle is cast in a tubesheet so that the fibers extend through the tubesheet.

A fiber bundle with a tubesheet at each end is placed in a cylindrical shell. The shell has a feed gas inlet at one end and a nonpermeate outlet at the other end. The shell also has a permeate outlet in the side of the shell near the feed gas inlet end. In this separator the bundle of hollow fibers may not completely fill the shell between the tubesheets leaving a gap between the fiber bundle and the interior of the shell. Moreover, if the separator is used in a horizontal position the space between the bundle of fibers and the inside of the shell at the top of the bundle will be larger because the fibers tend to sag. It has been discovered that such a gap provides a channel within which the permeate gas which moves radially out from the fiber and hence the bundle in a crosscurrent direction with respect to the fibers.

Crosscurrent flow does not efficiently utilize the separation membranes. A countercurrent flow corresponding to a bypass factor of less than 0.7 results in a significant improvement over cross flow with respect to the productivity of the separator module. Modification of a separator module to provide a bypass factor of 0.35 can yield 90% of the possible gain achievable in productivity when opposed to an all crosscurrent flow.

The present invention provides a conforming sleeve surrounding the fibers between the tubesheets at least about 60% of the fiber length. The sleeve is sealed to the tubesheet nearest the nonpermeate outlet in the separator. Preferably the sleeve extends from about 80% to about 90% of the length of the fibers measuring from the tubesheet nearest the nonpermeate outlet of the separator module.

The sleeve material has a resistance to gas flow which is higher than the resistance to gas flow axially down the cross-section of the bundle of fibers. This is necessary because the cross-sectional area of the sleeve exposed to the pressure differential in the separator module is larger than the bundle cross-section.

The sleeve can be either a flexible material substantially impermeable to the permeate gases or the sleeve can be formed by filling the void space in the separator between the fibers and the inside of the cylindrical shell. An example of a suitable material for filling the void space is a closed cell foam such as closed cell sheet sponge. An example of a flexible material which may be stretched over the tubesheet and then relaxes on the fibers is a stretch nylon material with a neoprene backing. Such a fabric when placed on the fiber bundle before its insertion into the shell has been called a "sock". If the material tends to flex away from the fibers of the fiber bundle during pressurization of the module, the sock can be restrained by a substantially inflexible "boot" type sheath of a material such as hypalon (chlorosulfonated polyethylene) coated nylon fabric with lacings to tighten the boot. The strings are laced much as a boot is laced to prevent the stretching or opening of the boot.

The sock is adhered to the tubesheet at the end of the fiber bundle nearest the nonpermeate gas outlet. The sock may be adhered to the tubesheet by use of adhesives or by placement of the sock over the bundle during the setting of the fibers in the tubesheet while the epoxy is still liquid. Other suitable means of adhering the sleeve or sock to the tubesheet at the end of the module nearest the nonpermeate gas outlet are known in the art.

When the sleeve is formed of void-filling material, for example, a closed cell foam, the need to adhere the material specifically to the tubesheet is lessened. In accordance with FIG. 2, the void space 128 is filled with a suitable material sufficiently compacted to obviate the need for adhering the material to the tubesheet. It should be noted in FIG. 2 that when the material filling the void is in place, the fiber bundle is gently compacted and held into position such that gaps and substantial voids between fibers or between the fiber bundle and the interior of the cylindrical shell are avoided.

The sleeve compacts the fiber bundle. The bundle should be compacted to produce a packing factor greater than about 45% and less than about 80%, preferably from 53% to 64%. Straight fibers tend to compact more easily than wavy fibers and care must be taken not to compact the fibers too much or the flow of the gas is deleteriously affected.

With an appropriate sleeve in place, the permeate gases flow in a countercurrent flow thereby enhancing the effectiveness of the gas separation module. The compacted closed cell foam is used to form an air tight seal between the fiber bundle and the interior of the cylindrical shell with sufficient holding strength to resist gas pressure formed in the hollow fiber bundle.

Suitable materials for providing a suitable sleeve include a polyethylene bag, a compacted closed cell foam material to fill the void, a flexible material to form a sock kind of sleeve, shrink wrap, sheet foam material, and the like. Combinations of materials may be used to provide superior sleeves in accordance with the present invention. For example, when a flexible sock is placed over the bundle of fibers it may be found desirable to fill the remainder of the void space with a foam so as to prevent expansion of the sock during pressurization of the module. Also if such flexible materials as a shrink wrap are used, it is generally desirable to use a boot or other means to prevent the shrink wrap from expanding under pressurization thus leaving a gap between the fibers and the interior of the shrink wrap. All such means are encompassed by the term "sleeve" as used herein.

The following examples are for illustrative purposes only and are not deemed limiting in any manner.

FIGS. 3 and 4 depict numerical results which would be attained from the use of a computer model which assumes 100 percent countercurrent flow. FIGS. 5 and 6 use a model which assumes a bypassing of permeate gas which reduces countercurrent sweep along the bundle.

## EXAMPLE 1

A bundle of hollow polysulfone fibers approximately 185 cm (six feet) long are prepared for placement in a cylindrical shell to make a gas separation module. The fibers are not true cylinders, but are constructed with a short wave of about 0.5 cm and produce a compacted bundle of fibers measuring about 18 centimeters in diameter. Each end of the fiber bundle is sealed in an epoxy tubesheet and the tubesheets cut so as to open the fiber ends allowing the passage of a gas through the bore of the fibers and hence, through the tubesheets.

This assembled bundle (with no sleeve) is placed into a steel shell and tested for air separation. The results of these tests are shown in FIG. 3 and can be described in two ways. One is the use of a cross flow computer model which gave essentially a constant separation factor for oxygen versus nitrogen for tests yielding nonpermeate concentrations of oxygen of 0.5, 2.0 and 5.0%. This constant alpha indicates that the correct model has been chosen, that the unit is operating in cross flow and the "intrinsic" alpha has been determined. Thus, if the module is forced to operate in true countercurrent flow, then the use of a countercurrent flow computer model would give the same results, a constant alpha of the same value. So as not to confuse the separation ability of one fiber bundle to that of another, the "intrinsic" value of alpha for the bundle is shown as 100%. The intrinsic value for the polymer can be determined for a dense flat sheet membrane of the membrane material. The determined intrinsic separation factor for polysulfone is about 6.0 for oxygen/nitrogen separation at 30°C.

The second way the results of these tests can be shown is with the use of a countercurrent flow model to compute alpha as a percent of the determined intrinsic separation factor. The countercurrent flow computed results are substantially lower and alpha declines as purity requirements are increased. The countercurrent flow model results are shown in FIG. 3 as "unmodified". The unmodified bundle is removed from the steel shell and the fibers between the tubesheets, except for about 15 centimeters at one end, are covered by a stretch nylon material with a neoprene backing to form a sock or sleeve around the fibers. The sock is adhered to one tubesheet at one end using LEXEL caulking to seal the sock to the tubesheet. The sock is then wrapped on the exterior to hold the sock securely in place with a hypalon coated nylon fabric held with lacing in the fashion of a rubber boot.

The fiber bundle with the sleeve in place is placed in a cylindrical shell in such a way that the tubesheet to which the sock is adhered is placed at the end of the cylindrical shell where the nonpermeate gas exits. The cylindrical shell is sealed and the gas separation module provides a bypass factor of 0.68 and a packing factor within the sleeve of about 56%.

The shell is subjected to the separation of air into a nitrogen nonpermeate product stream and an oxygen-laden permeate stream. The tests are performed at $9.65 \times 10^5$ $P_a$ (140 psig) at approximately 22°C. The calculated $O_2/N_2$ $\alpha$ results are adjusted to 30°C. The results are set forth in FIG. 3. A vertical test is run and a horizontal test is run collecting data where the non-permeate stream contained respectively 0.5% $O_2$, 2.0% $O_2$ and 5.0% $O_2$.

The results clearly show that the improvement in the bypass factor is retained whether the module is used in a vertical position or a horizontal position. The data clearly show that a substantial improvement is obtained by placing a sleeve about the fiber bundle.

For FIG. 3, the data points depicting the countercurrent flow (intrinsic alpha) are verified by a computer model employing the bypass factor which provides a leastsquares fit of the bypass factor for each of the tests for 0.5, 2.0 and 5.0% oxygen in the nonpermeate product streams.

## EXAMPLE 2

A module prepared in the same manner as Example 1 and having an active fiber length of about 185 centimeters, is tested at 0.5, 2.0, and 5.0 % $O_2$ in the nonpermeate stream. A bypass factor of 0.27 is selected for the addition of a sleeve providing a packing factor of about 56%, using the same type testing and modeling as in Example 1. The improved results are shown in FIG. 4. The tests are run at a pressure of 100 psig at approximately 22°C.

## EXAMPLE 3

A gas separation module is prepared substantially in accordance with the procedure shown in Example 1 except that the length of the fibers are approximately 305 centimeters. The unmodified module is tested to produce nonpermeate gas streams containing approximately .5% $O_2$, 2% $O_2$ and 5% $O_2$. The module is then modified in accordance with Example 1 and again tested under the conditions set forth in Table I. It is established the module has a bypass factor of 0.43 and in each instance showed a substantial improvement in recovery of product. It should be noted the higher the purity of the non-permeate gas as to nitrogen content, the better the improvement in recovery when the bypass factor is reduced from 1.0.

### TABLE I

|  | A | B | C | D | E | F |
|---|---|---|---|---|---|---|
|  | UNMODIFIED | UNMODIFIED | UNMODIFIED | MODIFIED | MODIFIED | MODIFIED |
| Bypass Factor | 1.00 | 1.00 | 1.00 | 0.43 | 0.43 | 0.43 |
| Feed | | | | | | |
| NM$^3$/HR | 65.80 | 54.12 | 41.08 | 67.56 | 51.21 | 42.07 |
| SCFM | (38.71) | (31.84) | (24.17) | (39.75) | (30.13) | (24.75) |
| Pressure (P$_a$) | $6.48x10^5$ | $6.89x10^5$ | $7.24x10^5$ | $6.53x10^5$ | $6.65x10^5$ | $6.79x10^5$ |
| Pressure (psig) | (94.00) | (100.00) | (105.00) | (94.70) | (96.50) | (98.50) |
| Temperature °C | 24.00 | 23.00 | 23.00 | 21.00 | 24.00 | 25.00 |
| Nonpermeate Product | | | | | | |
| Pressure(P$_a$) | $6.27x10^5$ | $6.76x10^5$ | $7.10x10^5$ | $6.24x10^5$ | $6.51x10^5$ | $6.62x10^5$ |
| Pressure (psig) | (91.00) | (98.00) | (103.00) | (90.50) | (94.50) | (96.00) |
| Temperature °C | 22.00 | 24.00 | 24.00 | 22.00 | 20.00 | 21.00 |
| % O$_2$ | 4.92 | 2.08 | 0.48 | 5.10 | 1.90 | 0.47 |
| % Recovery of Product | 48.30 | 34.75 | 20.03 | 52.13 | 38.27 | 26.30 |

## EXAMPLE 4

In this example different types of modification of the separation module are employed to produce an improved bypass factor wherein the bypass factor in each instance is less than 0.8.

In the instance of the void-filled separation module the gap between the outside of the fiber bundle and the inside of the cylindrical shell of the module is filled with a rubber type product which is SBR/Nitrile Blend in sheet form. The sleeve formed by the rubber type product shows an improvement in the $O_2/N_2$ $\alpha$ as set forth in Table II as a percentage of intrinsic alpha. This module is tested in a horizontal position and a vertical position to obtain nitrogen gas streams of 0.5, 2.0 and 5.0 percent $O_2$. The reported $O_2/N_2$ alphas in Table II were computed using a model which assumed 100% countercurrent flow, (bypassing = 0).

The same module is modified using a polyethylene sleeve wrapped with fiber reinforced tape where the bag is adhered to the tubesheet at the end of the module nearest the nonpermeate exit. The results clearly show that using a poly-bag as a sleeve surrounding the fiber bundle produces improved results in the $O_2/N_2$ $\alpha$ of a modified separation module.

A sock and boot-laced modification is made on this same module in accordance with the procedure discussed in Example 1. The data in Table II show an improvement in the $O_2/N_2$ $\alpha$ of the modified separation module.

In each instance in the above discussed modifications, the bypass factor was less than 0.8. All tests were conducted with feed air of approximately 100 psig (6.9 x $10^{-5}$ $P_a$) and 20°C.

TABLE II

| Type of Modification | $O_2/N_2$ ALPHA | | |
|---|---|---|---|
| | 1/2% $O_2$ | 2% $O_2$ | 5% $O_2$ |
| NONE | 61.3 | 70.1 | 77.1 |
| Void-filled Horizontal | 70.9 | - | 95.8 |
| Void-filled Vertical | 78.9 | 84.8 | 90.5 |
| Poly-bag | 78.7 | 83.6 | 88.3 |
| Sock & Boot Lace | 90.1 | 92.1 | 92.5 |

In FIG. 5 the improvement in recovery of product is shown according to the bypass factor. For instance, in the case where a nitrogen product is obtained of 98%, if the bypass factor is between 0.3 and 0.8, a substantial improvement in recovery of product is obtained when compared to a bypass factor of 1.0. The bypass factor of 1.0 represents an unmodified separation module where the fiber bundle is not surrounded by a sleeve.

FIG. 5 clearly shows the influence of the bypass factor on air product recovery.

FIG. 6 depicts the improvement obtained in $\alpha$ by a lowering of the bypass factor at the different ranges of $O_2$ in the $N_2$ nonpermeate product. For instance, in obtaining a $N_2$ product having 0.5% $O_2$, the higher the $\alpha$, the more efficient the separation process. Therefore, if the module is modified to obtain a bypass factor approaching zero, the process runs at its highest efficiency.

**Claims**

1. A membrane separation module having a reduced bypass factor comprising:
   (a) a cylindrical shell having a feed gas inlet and a product outlet at substantially opposite ends of the shell and a permeate outlet, the cylindrical shell containing
   (b) a bundle of hollow fiber membranes positioned in and extending along the shell, each end of the bundle terminating in and penetrating a tubesheet; and
   (c) a conforming sleeve positioned in the shell axially and surrounding the bundle of fibers, one end of the sleeve being affixed to the tubesheet nearest the product outlet, the sleeve extending at least about 60% of the length of the fibers as measured between the tubesheets and providing a packing factor to the bundle from about 45% to about 80% and conforming in such a manner that the bypass factor of the module is less than about 0.95.

2. The module of Claim 1 wherein the bypass factor is less than about 0.8.

3. The module of Claim 2 wherein the bypass factor is less than about 0.5.

4. The module of Claim 1 wherein the sleeve extends from about 60% to about 98% of the length of the fibers as measured between the tubesheets.

5. The module of Claim 4 wherein the sleeve extends from about 80% to about 90% of the length of the fibers as measured between the tubesheets.

6. The module of Claim 1 wherein the sleeve is comprised of a conforming flexible tube held to resist expansion due to internal gas pressure by a second external conforming rigid tube.

7. The module of Claim 1 wherein the sleeve is comprised of a closed cell foam material filling a gap between the bundle and the inside of the cylindrical shell.

8. The module of Claim 1 wherein the packing factor is from about 53% to about 64%.

9. The module of Claim 1 wherein the hollow fiber membranes are fibers having a permanent set wave of less than 0.5 cm in length and the wave having an amplitude of less than three times the diameter of the fiber.

10. A process for separating at least one gas in a gaseous mixture from at least one other gas in the gaseous mixture by selective permeation and providing a nonpermeated product containing the at least one nonpermeating gas reduced in the at least one other gas, comprising:
    feeding the gaseous mixture under pressure to an inlet of a gas separation module having a reduced bypass factor and which is comprised of
    (a) a cylindrical shell having a feed gas inlet and a product outlet at substantially opposite ends of the shell and a permeate outlet, the cylindrical shell containing
    (b) a bundle of hollow fiber membranes positioned in and extending along the shell, each end of the bundle terminating in and penetrating a tubesheet; and
    (c) a conforming sleeve positioned in the shell axially and surrounding the bundle of fibers, one end of the sleeve being affixed to the tubesheet nearest the product outlet, the sleeve extending at least about 60% of the length of the fibers as measured between the tubesheets, and providing a packing factor to the bundle from about 50% to about 80%, and conforming in such a manner that the bypass factor of the module is less than about 0.95,
    thereby permeating the at least one other gas into and through the hollow fiber membranes and recovering a nonpermeate gas product reduced in content of the at least one other gas.

11. The process of Claim 10 wherein the at least one other gas is oxygen and the nonpermeate gas product contains a reduced amount of oxygen.

12. The process of Claim 10 wherein the gaseous mixture is air.

13. The process of Claim 10 wherein the at least one other gas is oxygen and the nonpermeate gas product is substantially nitrogen.

14. The process of Claim 13 wherein the nonpermeate gas product consists essentially of nitrogen.

FIG. 1

FIG. 2

FIG. 3

FIG. 4

% RECOVERY OF PRODUCT

BYPASS FACTOR

FIG. 5

EP 0 547 575 A1

FIG. 6

European Patent
Office

# EUROPEAN SEARCH REPORT

Application Number

EP    92 12 1386

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 808 309 (R. F. BEAUPRE ET AL.) | | B01D63/02 |
| | --- | | B01D53/22 |
| A | FR-A-2 542 203 (SORIN BIOMEDICA S.P.A.) | | |
| | --- | | |
| P,A | EP-A-0 471 921 (THE DOW CHEMICAL CO.) | | |
| | --- | | |
| D,A | US-A-4 671 875 (D. J. STOOKEY) | | |
| | ----- | | |

| | | | TECHNICAL FIELDS SEARCHED (Int. Cl.5 ) |
|---|---|---|---|
| | | | B01D |

The present search report has been drawn up for all claims

| Place of search | Date of completion of the search | Examiner |
|---|---|---|
| THE HAGUE | 05 APRIL 1993 | DEVISME F.R. |

EPO FORM 1503 03.82 (P0401)